# EUROPÄISCHE PATENTSCHRIFT

(11) **EP 1 514 019 B1**
(45) Veröffentlichungstag und Bekanntmachung des Hinweises auf die Patenterteilung: **30.03.2011**
(21) Anmeldenummer: 03759927.1
(22) Anmeldetag: 11.06.2003
(51) Int. Cl.: F02D 41/40

(54) **VERFAHREN ZUM EINSPRITZEN VON KRAFTSTOFF**
METHOD FOR INJECTING FUEL
PROCEDE D'INJECTION DE CARBURANT

(30) Priorität: 15.06.2002 DE 10226692
(43) Veröffentlichungstag der Anmeldung: 16.03.2005
(73) Patentinhaber: Daimler AG, 70327 Stuttgart (DE)
(72) Erfinder: GRUBER, Gerhard, 71522 Backnang (DE)
(74) Vertreter: JENSEN & SON
(86) Internationale Anmeldenummer: PCT/EP2003/006086
(87) Internationale Veröffentlichungsnummer: WO 2003/106831

(56) Entgegenhaltungen:
- EP-A- 0 953 756
- WO-A-01/66927
- WO-A-02/25088
- DE-C- 19 632 650
- US-A- 6 012 428
- PATENT ABSTRACTS OF JAPAN vol. 1999, no. 11, 30. September 1999 (1999-09-30) & JP 11 173186 A (DENSO CORP), 29. Juni 1999 (1999-06-29)

## Beschreibung

Die Erfindung betrifft ein Verfahren zum Einspritzen von Kraftstoff in die Brennräume einer mehrere Zylinder aufweisenden Brennkraftmaschine nach der im Oberbegriff von Anspruch 1 näher definierten Art.

Aus der EP 1 132 607 A2 ist es bereits bekannt, während eines Arbeitsspiels des Kolbens vor der eigentlichen Haupteinspritzung eine oder mehrere Voreinspritzungen durchzuführen. Weitere ähnliche Verfahren zum Einspritzen von Kraftstoff beschreiben die EP 1 138 921 A2, die EP 1 081 365 A2 oder die DE 196 32 650 Cl.

Durch diese Aufteilung der Einspritzung in die wenigstens eine Voreinspritzung und die Haupteinspritzung wird eine Verringerung des Brennraumdruckgradienten und somit ein langsamerer Druckaufbau im Brennraum erreicht. Dies führt zu einem verbesserten Geräuschverhalten der Brennkraftmaschine und zu einem besseren Rundlauf derselben.

In diesem Zusammenhang wird, insbesondere in Bereichen mit niedriger Drehzahl, häufig auch mit zwei Voreinspritzungen pro Arbeitsspiel des Kolbens gearbeitet, wohingegen in Bereichen mit hoher Drehzahl aus Gründen der besseren Leistungsausbeute häufig ohne Voreinspritzung und lediglich mit der einen Haupteinspritzung gearbeitet wird. Insofern kann von einer variablen Anzahl an Voreinspritzungen pro Haupteinspritzung geredet werden. Da auch nach der Haupteinspritzung noch weitere Einspritzungen mit geringerer Menge, also "Nacheinspritzungen", durchgeführt werden können, werden Vor- und Nacheinspritzung in dem Oberbegriff "Nebeneinspritzung" zusammengefasst.

In den Übergangsbereichen, in denen von einer ursprünglichen Anzahl an Nebeneinspritzungen pro Arbeitsspiel bzw. pro Haupteinspritzung auf eine geänderte Anzahl an Nebeneinspritzungen gewechselt wird, entstehen jedoch häufig Probleme bezüglich der Regelbarkeit des Einspritzvorgangs, sowie der Drehmoment- und Leistungsabgabe, des Abgasverhaltens, der Drehzahlstabilität und des Geräuschverhaltens der Brennkraftmaschine. Hierbei ist unwesentlich, ob die Anzahl der Nebeneinspritzungen im Zuge des Verfahrens erhöht oder verringert wird.

Aus der gattungsbildenden WO 01 66927 A1 ist ein Verfahren und eine Vorrichtung zur Steuerung der Kraftstoffeinspritzung in einer Brennkraftmaschine bekannt. Es wird zwischen einem ersten Zustand und einen zweiten Zustand unterschieden. Unmittelbar vor dem Übergang vom ersten Zustand in den zweiten Zustand werden die Daten der Einspritzung derart verändert, dass die Emissionen, insbesondere die Geräuschentwicklung, allmählich an die Emissionen im zweiten Zustand angenähert werden. Dazu kann die Häufigkeit der Nebeneinspritzungen kontinuierlich zwischen den beiden Zuständen verändert werden, wobei die Zustände jeweils zwei, eine oder keine Nebeneinspritzung pro Haupteinspritzung aufweisen. Nachteilig ist dabei, dass die Anzahl der Zustände lediglich eine grobe Unterscheidung von Lastbereichen in einem Drehzahlband der Brennkraftmaschine zulässt.

Es ist daher Aufgabe der vorliegenden Erfindung, ein Verfahren zum Einspritzen von Kraftstoff in die Brennräume einer Brennkraftmaschine zu schaffen, bei dem der Übergang zwischen unterschiedlichen Lastbereichen nicht zu einer Beeinträchtigung des Betriebs der Brennkraftmaschine führt bzw. bei dem dieser Übergang harmonisch verläuft.

Erfindungsgemäß wird diese Aufgabe durch die in Anspruch 1 genannten Merkmale gelöst.

Durch die erfindungsgemäße Zuordnung der sich ergebenden unterschiedlichen Anzahlen NE an durchschnittlichen Nebeneinspritzungen pro zugeordneter Haupteinspritzung an unterschiedliche Lastbereiche zwischen einer Leerlaufdrehzahl n_{L} und einer maximalen Drehzahl nₘₐₓ wird der Übergang zwischen den unterschiedlichen Lastbereichen vorteilhafterweise nicht schlagartig durchgeführt, sondern es ergibt sich insgesamt ein harmonischer Betrieb der Brennkraftmaschine von der Leerlaufdrehzahl n_{L} bis zur maximalen Drehzahl nₘₐₓ.

Auf diese Weise stellen sich, über die Gesamtzahl der Zylinder der Brennkraftmaschine betrachtet, d. h. im Durchschnitt, mehrere Zustände in unterschiedlichen Lastbereichen ein, in denen nicht ganzzahlige Anzahlen von Nebeneinspritzungen pro zugeordneter Haupteinspritzung durchgeführt werden, wodurch vorteilhafterweise die ansonsten entstehenden Nachteile eines ganzzahligen Übergangs der Nebeneinspritzungen bezüglich Geräuschentwicklung, Drehmoment- und Leistungsabgabe, Drehzahlschwankungen und Regelbarkeit des Betriebs der Brennkraftmaschine vermieden werden.

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Dabei zeigen:
- Fig. 1: eine äußerst schematisch dargestellte Brennkraftma- schine, bei der das erfindungsgemäße Verfahren durch- geführt werden kann; und
- Fig. 2: ein Diagramm zur Veranschaulichung des schrittweisen Übergangs zwischen unterschiedlichen Anzahlen von Ne- beneinspritzungen während des Arbeitsspiels eines Kolbens.

Eine Brennkraftmaschine 1 weist in an sich bekannter Weise ein Kurbelgehäuse 2 und einen daran angebrachten Zylinderkopf 3 auf. In dem Kurbelgehäuse 2 ist eine Kurbelwelle 4 gelagert, an welcher im vorliegenden Fall insgesamt vier Pleuel 5a - 5d mit zugeordneten Kolben 6a - 6d angeordnet sind. Die Kolben 6a - 6d führen in jeweiligen Zylindern 7a - 7d eine oszillierende Bewegung aus. Wie nachfolgend deutlich wird, könnte die Brennkraftmaschine 1 auch jede andere Anzahl an Zylindern 7 aufweisen.

Der Zylinderkopf 3 ist mit Einspritzventilen 8a - 8d versehen, die jedem einzelnen der Zylinder 7a - 7d zugeordnet und dafür vorgesehen sind, Kraftstoff in Brennräume 9a - 9d der Zylinder 7a - 7d einzuspritzen. Im vorliegenden Fall handelt es sich bei der Brennkraftmaschine 1 um eine direkteinspritzende, nach dem Dieselprinzip arbeitende ViertaktBrennkraftmaschine 1. Bei derartigen Brennkraftmaschinen 1 hat es sich als bezüglich der Geräuschentwicklung und des Rundlaufs derselben als vorteilhaft erwiesen, wenn während des Arbeitsspiels eines der Kolben 6a - 6d, im vorliegenden Fall also während jeweils zweier Oszillationsbewegungen des jeweiligen Kolbens 6a - 6d bzw. während zweier Umdrehungen der Kurbelwelle 4, zusätzlich zu der jeweiligen Einspritzung der Hauptmenge, die nachfolgend als Haupteinspritzung bezeichnet wird, eine oder mehrere Voreinspritzungen durchgeführt werden. Zusätzlich ist es auch möglich, der Haupteinspritzung nachgelagerte Einspritzungen, sogenannte "Nacheinspritzungen", durchzuführen. Im folgenden werden Vor- und Nacheinspritzungen in dem Begriff "Nebeneinspritzung" zusammengefaßt.

Der Zeitpunkt einer Voreinspritzung, die teilweise auch als Piloteinspritzung bezeichnet wird, bzw. der Nacheinspritzung kann dabei so gewählt werden, wie er bereits in vielfacher Weise im Stand der Technik beschrieben ist, und wird durch ein mit den Einspritzventilen 8a - 8d verbundenes Steuergerät 10 gesteuert.

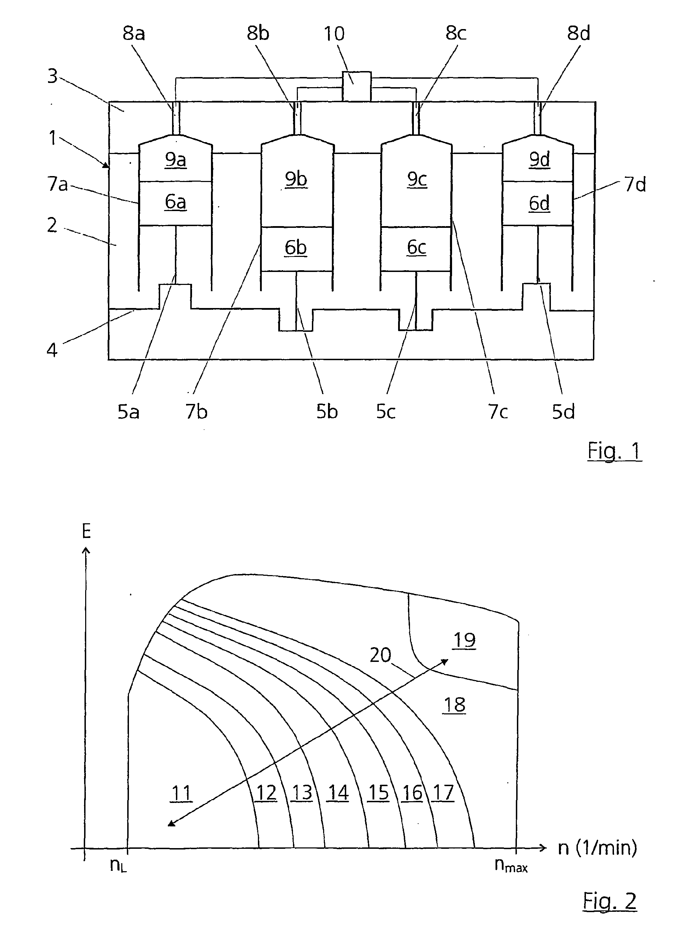

Die Anzahl an Nebeneinspritzungen pro Arbeitsspiel eines jeweiligen Kolbens 6a - 6d kann, je nach Lastzustand der Brennkraftmaschine 1, variiert werden, was prinzipiell ebenfalls bereits aus dem Stand der Technik bekannt ist. Fig. 2 verdeutlicht dies anhand eines Diagramms, in dem die während eines Einspritzvorgangs (also Haupteinspritzung und gegebenenfalls eine oder mehrere Nebeneinspritzungen) insgesamt in einen der Brennräume 9a - 9d eingespritzte Kraftstoffmenge E über der Drehzahl n der Kurbelwelle 4 der Brennkraftmaschine 1 aufgetragen ist.

Um bei einem Übergang von unterschiedlichen Anzahlen von Nebeneinspritzungen bei einer zugeordneten Haupteinspritzung eine geringere Geräuschentwicklung, eine verbesserte Drehmoment- und Leistungsabgabe, geringere Drehzahlschwankungen und ein besseres Abgasverhalten zu erreichen, wird mit dem nachfolgend beschriebenen Verfahren ein ganzzahliger Sprung der Anzahl an Nebeneinspritzungen verhindert. Hierzu wird bei einer erforderlichen Änderung der Anzahl der pro Arbeitsspiel eines der Kolben 6a - 6d bzw. pro zugeordneter Haupteinspritzung durchgeführten Nebeneinspritzungen die geänderte Anzahl an Nebeneinspritzungen nur für einen Teil der Zylinder 7a - 7d durchgeführt, während in dem anderen Teil der Zylinder 7a - 7d die ursprüngliche Anzahl von Nebeneinspritzungen durchgeführt wird. Dies führt, über alle Zylinder 7a - 7d der Brennkraftmaschine 1 betrachtet, zu einer nicht ganzzahligen Anzahl an Nebeneinspritzungen, wobei zum Erreichen eines insgesamt kontinuierlicheren Übergangs die geänderte Anzahl an Nebeneinspritzungen zunächst für einen geringeren Teil der Zylinder 7a - 7d und anschließend für einen größeren Teil der Zylinder 7a - 7d durchgeführt wird.

Beispielsweise wenn die Anzahl an Nebeneinspritzungen pro zugeordneter Haupteinspritzung von zwei Nebeneinspritzungen auf eine Nebeneinspritzungen geändert werden soll, so kann zunächst beispielsweise lediglich in dem Zylinder 7d nur eine Nebeneinspritzung und in den Zylindern 7a - 7c weiterhin zwei Nebeneinspritzungen durchgeführt werden.

Gemäß der Formel NE = 2 - 1/z, wobei NE für die Anzahl der Nebeneinspritzungen pro zugeordneter Haupteinspritzung über alle Zylinder 7 der Brennkraftmaschine 1 betrachtet, also für die Anzahl der durchschnittlichen Nebeneinspritzungen, und z für die Anzahl der Zylinder 7 der Brennkraftmaschine 1 steht, reduziert sich auf diese Weise die durchschnittliche Anzahl an Nebeneinspritzungen pro zwei Umdrehungen der Kurbelwelle 4, also pro Arbeitsspiel eines der Kolben 6a - 6d bzw. pro zugeordneter Haupteinspritzung auf 1,75 Nebeneinspritzungen. Diese Anzahl der Nebeneinspritzungen läßt sich weiter auf NE = 2 - 2/z, NE = 2 - 3/z bis zu NE = 2 - z/z, also auf eine Nebeneinspritzung pro zugeordneter Haupteinspritzung reduzieren.

Soll ein Übergang von einer Nebeneinspritzung pro Haupteinspritzung auf null Nebeneinspritzungen pro Haupteinspritzung reduziert werden, so kann dies gemäß den Gleichungen NE = 1 - 1/z, NE = 1 - 2/z bis schließlich NE = 1 - z/z durchgeführt werden.

Somit ergeben sich für unterschiedliche Lastbereiche zwischen einer Leerlaufdrehzahl n_{L} und einer maximalen Drehzahl nₘₐₓ der Brennkraftmaschine 1 unterschiedliche Anzahlen an durchschnittlichen Nebeneinspritzungen. Die Anzahl NE der durchschnittlichen Nebeneinspritzungen pro zugeordneter Haupteinspritzung ergibt sich aus den Feldern 11 - 19 in dem Diagramm nach Fig. 2, wobei diese Darstellung selbstverständlich nur als beispielhaft anzusehen ist.

Die nachfolgende Tabelle gibt ein Beispiel für einen möglichen Ablauf der Reduzierung der Nebeneinspritzungen bei einer Brennkraftmaschine 1 mit vier Zylindern 7a - 7d an. Der in der Tabelle angegebene Verlauf folgt einer Linie 20, die durch die Felder 11 - 19 des Diagramms gemäß Fig. 2 verläuft,
also von geringer Drehzahl zu hoher Drehzahl und von geringer Einspritzmenge zu hoher Einspritzmenge:

| | | Anzahl der Nebeneinspritzungen pro Zylinder Z | | | |
|---|---|---|---|---|---|
| Feld | Anzahl der durchschnittlichen Nebeneinspritzungen NE | 7a | 7b | 7c | 7d |
| 11 | 2 | 2 | 2 | 2 | 2 |
| 12 | 1,75 | 2 | 2 | 2 | 1 |
| | | 1 | 2 | 2 | 2 |
| | | 2 | 1 | 2 | 2 |
| | | 2 | 2 | 1 | 2 |
| | | 2 | 2 | 2 | 1 |
| | | usw. | | | |
| 13 | 1,5 | 2 | 2 | 1 | 1 |
| | | 1 | 2 | 2 | 1 |
| | | 1 | 1 | 2 | 2 |
| | | 2 | 1 | 1 | 2 |
| | | 2 | 2 | 1 | 1 |
| | | usw. | | | |
| 14 | 1,25 | 2 | 1 | 1 | 1 |
| | | 1 | 2 | 1 | 1 |
| | | 1 | 1 | 2 | 1 |
| | | 1 | 1 | 1 | 2 |
| | | 2 | 1 | 1 | 1 |
| | | usw. | | | |
| 15 | 1 | 1 | 1 | 1 | 1 |
| | | usw. | | | |
| 16 | 0,75 | 0 | 1 | 1 | 1 |
| | | 1 | 0 | 1 | 1 |
| | | 1 | 1 | 0 | 1 |
| | | 1 | 1 | 1 | 0 |
| | | usw. | | | |
| 17 | 0,5 | 0 | 0 | 1 | 1 |
| | | 1 | 0 | 0 | 1 |
| | | 1 | 1 | 0 | 0 |
| | | 0 | 1 | 1 | 0 |
| | | 0 | 0 | 1 | 1 |
| | | usw. | | | |
| 18 | 0,25 | 0 | 0 | 0 | 1 |
| | | 1 | 0 | 0 | 0 |
| | | 0 | 0 | 1 | 0 |
| | | 0 | 0 | 0 | 1 |
| | | usw. | | | |
| 19 | 0 | 0 | 0 | 0 | 0 |
| | | usw. | | | |

Selbstverständlich ist das beschriebene Verfahren für Brennkraftmaschinen 1 mit den unterschiedlichsten Anzahlen an Zylindern 7 geeignet, wobei in der nachfolgenden Tabelle die aufgrund der gesamten Anzahl z von Zylindern 7 jeweils möglichen durchschnittlichen Nebeneinspritzungen NE auf zwei Stellen gerundet angegeben sind:

| Anzahl z der Zylinder 7 | Übergangsbereich der durchschnittlichen Nebeneinspritzungen NE pro zugeordneter Haupteinspritzung | | | | | | | | |
|---|---|---|---|---|---|---|---|---|---|
| 3 | 2 | 1,67 | 1,33 | 1,0 | 0,67 | 0,33 | 0 | | |
| 4 | 2 | 1,75 | 1,5 | 1,25 | 1,0 | 0,75 | 0,5 | 0,25 | 0 |
| 5 | 2 | 1,8 | 1,6 | 1,4 | 1,2 | 1,0 | 0,8 | 0,6 | usw. |
| 6 | 2 | 1,83 | 1,67 | 1,5 | 1,33 | 1,17 | 1,0 | 0,83 | usw. |
| 8 | 2 | 1,88 | 1,75 | 1,63 | 1,5 | 1,38 | 1,25 | 1,13 | usw. |
| usw. | | | | | | | | | |

Hieraus ergibt sich, daß bei einer größeren Anzahl an Zylindern 7 der Brennkraftmaschine 1 vom ursprünglich stufenweisen Übergang auf einen annähernd kontinuierlichen Übergang der Anzahl der Nebeneinspritzungen pro zugeordneter Haupteinspritzung gewechselt wird. Selbstverständlich kann das beschriebene Verfahren nicht nur bei der Verringerung der Anzahl der Nebeneinspritzungen angewandt werden, sondern auch bei einer Erhöhung. Um dies zu verdeutlichen, ist die Linie 20 in Fig. 2 als Doppelpfeil ausgeführt. Des weiteren wird deutlich, daß bei einer höheren Anzahl z an Zylindern 7 der Brennkraftmaschine 1 die erste Tabelle lediglich auf der rechten Seite durch entsprechende Spalten ergänzt werden müßte.

Das beschriebene Verfahren kann selbstverständlich auch verwendet werden, wenn mehr als zwei Vor- und/oder Nacheinspritzungen durchgeführt werden. Außerdem ist es möglich, bei unterschiedlichen Anzahlen von Nebeneinspritzungen pro Arbeitsspiel des Kolbens 6 einen zyklischen oder antizyklischen Wechsel durchzuführen.

## Patentansprüche

1. Verfahren zum Einspritzen von Kraftstoff in die Brennräume einer mehrere Zylinder aufweisenden direkteinspritzenden Brennkraftmaschine, wobei während eines Arbeitsspiels eines in dem Zylinder eine oszillierende Bewegung ausführenden Kolbens eine Haupteinspritzung und eine der Haupteinspritzung zugeordnete, variable Anzahl von Nebeneinspritzungen durchgeführt werden und bei einer Änderung der Anzahl der pro zugeordneter Haupteinspritzung durchgeführten Nebeneinspritzungen die geänderte Anzahl an Nebeneinspritzungen nur bei einem Teil der Zylinder durchgeführt wird, während bei dem anderen Teil der Zylinder die ursprüngliche Anzahl von Nebeneinspritzungen durchgeführt wird, wobei die geänderte Anzahl an Nebeneinspritzungen zunächst für einen geringeren Teil der Zylinder und anschließend für einen größeren Teil der Zylinder durchgeführt wird,
**dadurch gekennzeichnet,**
**dass** die sich ergebenden unterschiedlichen Anzahlen NE an durchschnittlichen Nebeneinspritzungen pro zugeordneter Haupteinspritzung unterschiedlichen Lastbereichen zwischen einer Leerlaufdrehzahl n_{L} und einer maximalen Drehzahl nₘₐₓ zugeordnet werden und eine Verringerung der Anzahl der Nebeneinspritzungen von geringer Drehzahl zu hoher Drehzahl und von geringer Einspritzmenge zu hoher Einspritzmenge oder einer Erhöhung der Anzahl der Nebeneinspritzungen von hoher Drehzahl zu geringer Drehzahl und hoher Einspritzmenge zu geringer Einspritzmenge erfolgt und die Anzahlen NE an durchschnittlichen Nebeneinspritzungen pro zugeordneter Haupteinspritzung von zwei Nebeneinspritzungen auf eine Nebeneinspritzung gemäß den Formeln NE = 2 - 1/z, NE= 2 - 2/z, NE = 2 - 3/z bis schließlich NE = 2 - z/z und die Anzahlen NE an durchschnittlichen Nebeneinspritzungen pro zugeordneter Haupteinspritzung von einer Nebeneinspritzung auf null Nebeneinspritzungen gemäß den Formeln NE = 1 - 1/z, NE= 1 - 2/z, NE = 1 - 3/z bis schließlich NE = 1 - z/z reduziert werden, wobei z für die Anzahl der Zylinder (7) der Brennkraftmaschine (1) steht.

2. Verfahren nach Anspruch 1,
**dadurch gekennzeichnet,**
**dass** die Anzahl der Nebeneinspritzungen pro Arbeitsspiel des Kolbens (6) von zwei oder mehr pro zugeordneter Haupteinspritzung auf null pro zugeordneter Haupteinspritzung schrittweise reduziert wird.

3. Verfahren nach Anspruch 1,
**dadurch gekennzeichnet ,**
**dass** die Anzahl der Nebeneinspritzungen pro Arbeitsspiel des Kolbens (6) von null pro zugeordneter Haupteinspritzung auf zwei oder mehr pro zugeordneter Haupteinspritzung schrittweise erhöht wird.

4. Verfahren nach Anspruch 1, 2 oder 3,
**dadurch gekennzeichnet,**
**dass** als Nebeneinspritzung eine Voreinspritzung durchgeführt wird.

5. Verfahren nach einem der Ansprüche 1 bis 4,
**dadurch gekennzeichnet,**
**dass** als Nebeneinspritzung eine Nacheinspritzung durchgeführt wird.

6. Verfahren nach einem der Ansprüche 1 bis 5,
**dadurch gekennzeichnet,**
**dass** bei unterschiedlichen Anzahlen von Nebeneinspritzungen pro Arbeitsspiel des Kolbens (6) ein zyklischer oder antizyklischer Wechsel durchgeführt wird.

## Claims

1. Method for injecting fuel into the combustion chambers of a directly injected internal combustion engine having several cylinders, wherein, during a working cycle of a piston performing an oscillating motion in the cylinder, a main injection and a variable number of secondary injections assigned to the main injection are carried out and wherein, if the number of secondary injections carried out for each associated main injection changes, the changed number of secondary injections is carried out in only a part of the cylinders while the original number of secondary injections is maintained in the other part of the cylinders, wherein the changed number of secondary injections is initially carried out for a smaller part of the cylinders and then for a larger part of the cylinders,
**characterised in that**
the resulting different numbers NE of average secondary injections for each associated main injection are assigned to different load ranges between an idle speed n_{L} and a maximum speed nₘₐₓ, and **in that** the number of secondary injections is reduced from a low speed to a high speed and from a low amount of fuel injected to a high amount of fuel injected or the number of secondary injections is increased from a high speed to a low speed and from a high amount of fuel injected to a low amount of fuel injected, and **in that** the numbers NE of average secondary injections for each associated main injection are reduced from two secondary injections to one secondary injection in accordance with the formulae NE = 2 - 1/z, NE = 2 - 2/z, NE = 2 - 3/z up to NE = 2 - z/z and the numbers NE of average secondary injections for each associated main injection are reduced from one secondary injection to zero secondary injections in accordance with the formulae NE = 1 - 1/z, NE = 1 - 2/z, NE = 1 - 3/z up to NE = 1 - z/z, wherein z represents the number of cylinders (7) of the internal combustion engine (1).

2. Method according to claim 1
**characterised in that**
the number of secondary injections per working cycle of the piston (6) is gradually reduced from two or more for each associated main injection to zero for each associated main injection.

3. Method according to claim 1
**characterised in that**
the number of secondary injections per working cycle of the piston (6) is gradually increased from zero for each associated main injection to two or more for each associated main injection.

4. Method according to claim 1, 2 or 3,
**characterised in that**
a pilot injection is carried out as a secondary injection.

5. Method according to any of claims 1 to 4,
**characterised in that**
a post-injection is carried out as a secondary injection.

6. Method according to any of claims 1 to 5,
**characterised in that**
a cyclic or anti-cyclic change is carried out at different numbers of secondary injections per working cycle of the piston (6).

## Revendications

1. Procédé d'injection de carburant dans les chambres de combustion d'un moteur à combustion interne à injection directe doté d'une pluralité de cylindres, pendant un cycle de fonctionnement d'un piston effectuant un mouvement oscillatoire dans le cylindre, une injection principale et un nombre variable d'injections secondaires associées à l'injection principale étant réalisées et en cas de modification du nombre d'injections secondaires par injection principale associée, le nombre modifié d'injections secondaires est réalisé uniquement dans une partie du cylindre tandis que le nombre initial d'injections secondaires est réalisé dans l'autre partie du cylindre, le nombre modifié d'injections secondaires étant d'abord effectué pour une petite partie du cylindre et ensuite pour une plus grande partie du cylindre, **caractérisé en ce que** les différents nombres NE obtenus d'injections secondaires moyennes par injection principale associée sont affectés à différentes plages de charge entre une vitesse de ralenti n_{L} et un régime maximum nₘₐₓ et une réduction du nombre d'injections secondaires se produit d'un faible régime à un régime élevé et d'une quantité d'injection faible à une quantité d'injection élevée ou une augmentation du nombre d'injections secondaires d'un régime élevé à un régime faible et d'une quantité d'injection élevée à une quantité d'injection faible et les nombres NE d'injections secondaires moyennes par injection principale associée passent de deux injections secondaires à une injection secondaire selon les formules NE = 2 - 1/z, NE = 2 - 2/z, NE = 2 - 3/z jusqu'à la fin NE = 2 - z/z et les nombres NE d'injections secondaires moyennes par injection principale associée passent d'une injection secondaire à zéro injection secondaire selon les formules NE = 1 - 1/z, NE = 1 - 2 /z, NE = 1 - 3/z jusqu'à la fin NE = 1 - z/z, z représente le nombre de cylindres (7) du moteur (1) à combustion interne.

2. Procédé selon la revendication 1, **caractérisé en ce que** le nombre d'injections secondaires par cycle de fonctionnement du piston (6) est réduit progressivement de deux ou plus par injection principale associée à zéro par injection principale associée.

3. Procédé selon la revendication 1, **caractérisé en ce que** le nombre d'injections secondaires par cycle de fonctionnement du piston (6) est porté progressivement de zéro par injection principale associée à deux ou plus par injection principale associée.

4. Procédé selon la revendication 1, 2 ou 3, **caractérisé en ce que** une préinjection est réalisée en tant qu'injection secondaire.

5. Procédé selon l'une quelconque des revendications 1 à 4, **caractérisé en ce qu'**une post-injection est réalisée en tant qu'injection secondaire.

6. Procédé selon l'une quelconque des revendications 1 à 5, **caractérisé en ce qu'**en cas de nombres différents d'injections secondaires par cycle de fonctionnement du piston (6), un changement cyclique ou anticyclique est réalisé.
